Europäisches Patentamt

European Patent Office

Office européen des brevets

(19)

(11) Publication number: **0 112 666**
A2

(12) # EUROPEAN PATENT APPLICATION

(21) Application number: 83307374.5

(22) Date of filing: 05.12.83

(51) Int. Cl.³: **H 04 L 1/00,** H 04 J 3/16, H 04 M 11/06

(30) Priority: 24.12.82 GB 8236785

(43) Date of publication of application: 04.07.84 Bulletin 84/27

(84) Designated Contracting States: DE FR GB NL

(71) Applicant: PLESSEY OVERSEAS LIMITED, Vicarage Lane, Ilford Essex IGI 4AQ (GB)

(72) Inventor: King, Reginald Alfred, 6, Clevedon Road, Tilehurst Reading Berks. RG3 6RL (GB)
Inventor: Smith, Dennis Clayton, 6, Carisbrooke Court, Romsey Hants (GB)

(74) Representative: Fish, Norman Ernest, The Plessey Company plc Intellectual Property Department Vicarage Lane, Ilford Essex IG1 4AQ (GB)

(54) **Priority coding apparatus.**

(57) A communication system comprising a local transceiver for the transmission to and reception from a similar remotely located transceiver of data over N-channels each arranged to carry digital data at, or with reference to a common channel centre frequency, wherein data chips apertaining to each channel are transmitted sequentially in TDM (time division multiplex) mode; wherein at least one of the N-channels is used for the transmission of priority data bits each defined by M chips so that one priority data bit is transmitted each NM data chips and wherein P data bits define each data character so that one priority data character is transmitted each NMP data chips, the local transceiver including means for adapting the number of channels assigned to carry priority data characters in dependence upon a received error rate signal transmitted from the remotely located transceiver indicative of the error rate detected in signals received from the local transceiver, whereby an increase in the detected error rate can be compensated for by a corresponding increase in the channels assigned, and means for transmitting to the remotely located transceiver a transmitted error rate signal indicative of the error rate in data signals received therefrom, whereby at the remotely located transceiver the number of transmitted channels assigned to priority data can be increased to compensate for increases in detected error rate at the local transceiver.

0112666

## PRIORITY CODING APPARATUS

This invention relates to communication systems and more especially it relates to communication systems comprising a plurality of communication channels, affording or adaptable to afford varying degrees of noise immunity whereby high priority information can be transmitted over a channel having higher noise immunity than a channel carrying lower priority information.

According to the present invention a communication system comprises a local transceiver for the transmission to and reception from a similar remotely located transceiver of data over N-channels each arranged to carry digital data at, or with reference to a common channel centre frequency, wherein data chips apertaining to each channel are transmitted sequentially in TDM (time division multiplex) mode; wherein at least one of the N-channels is used for the transmission of priority data bits each defined by M chips so that one priority data bit is transmitted each NM data chips and wherein P data bits define each data character so that one priority data character is transmitted each NMP data chips, the local transceiver including means for adapting the number of channels assigned to carry priority data characters in dependence upon a received error rate signal transmitted from the remotely located transceiver indicative of the error rate detected in signals received from the local transceiver, whereby an increase in the detected error rate can be compensated for by a corresponding increase in the channels assigned, and means for transmitting to the remotely located transceiver a transmitted error rate signal indicative of the error rate in data signals received therefrom, whereby at the remotely located transceiver the number of transmitted channels assigned to priority data can be increased to compensate for increases in detected error rate at the local transceiver.

The local transceiver may include indicator means arranged to be responsive to the received error rate signal transmitted from the remotely located transceiver, for indicating the error rate detected at the remotely located transceiver in data signals received from the local transceiver and switch means operable to change the channels assigned, in accordance with the indication provided by the indicator means.

Alternatively the system may be fully automatic and the local transmitter may include control means responsive to the received error rate signal transmitted from the remotely located transceiver for changing in the local transceiver the channels assigned to priority data, in accordance with error rate which obtains at the remote transceiver.

The system in this latter case is automatically adaptive to provide increased noise immunity when required for the communication of priority data.

Each transceiver may include a data encoder which includes the control means and which is arranged to feed data defining the N channels to chip store means having a capacity for at least NM data chips, bit store means responsive contemporaneously to M chips in the chip store means, the M chips being spaced one from the other by (N-1) chips, bit detector means responsive to the contents of the bit store means for loading data appertaining to bits into channel store means at addresses determined in accordance with the digital code (0 or 1), of the chips in the bit store means, comparator means responsive to the channel store means and to a character store for providing output data appertaining to a character when correspondence obtains between data bits in the channel store means and data in the character store and an error rate detector responsive to the comparator means for producing the transmitted error rate signal, the control means of the data encoder being responsive to the received error rate signal for adapting the number of channels assigned to carry priority data by assigning data chips corresponding to priority channel chips to a number of other channels.

Data may be carried for all channels on a common channel carrier frequency by means of AM modulation.

Alternatively however data for all channels may be carried in the form of phase or frequency modulation referred to a common channel centre frequency or by a combination of AM and FM.

One of the N channels might normally be assigned for priority data and the remaining N-1 channels may be used individually for separate discrete channel transmissions or in a group or groups for the transmission of pulse coded or delta modulated speech data.

In the event that noise conditions occur which increase the error rate beyond a predetermined limit, automatic adaptive compensation will be provided for priority data transmissions comprising assigning other additional channels for the transmission of priority data until the detected error rate is reduced and in the limit all channels may be assigned to priority data.

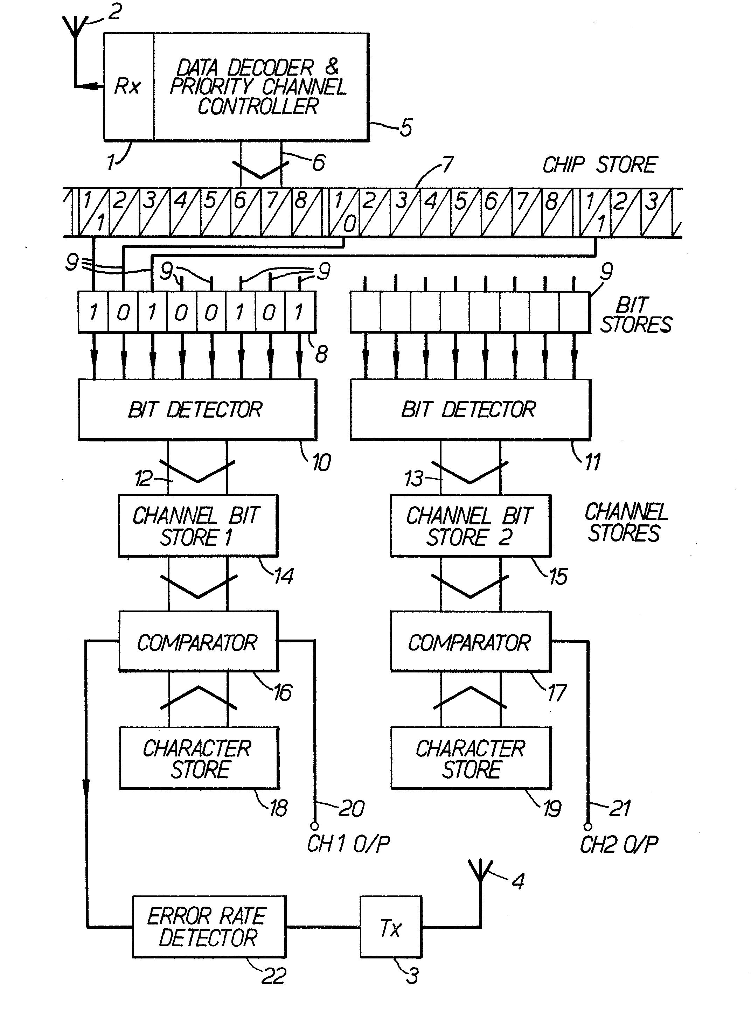

One embodiment of the invention will now be described solely by way of example with reference to the accompanying drawing which is a generally schematic block diagram of a transceiver.

Referring now to the drawing a communications system comprises two similar transceivers hereinbefore referred to as the local transceiver and the remotely located transceiver. Each transceiver comprises a receiver 1 fed from a receiving aerial 2 and a transmitter 3 arranged to feed the transmitter aerial 4. Data may be transmitted utilising any convenient known form of modulation such as amplitude modulation, phase modulation, or frequency modulation, received signals being fed to a data decoder and priority channel controller 5. Received data is fed via a data highway 6 to a chip store 7 shown schematically and comprising sufficient storage capacity to store contemporaneously chips appertaining to one bit from each channel. Thus if N channels are used and M chips comprise each data bit the chip store capacity must be at least NM. In the present example eight channels are transmitted and data bits each comprise eight chips. Thus the chip store capacity must be at least 64. Channel chips are transmitted in a TDM mode so that chips relating to channel 1 for example are spaced apart by N-1 chips appertaining to the other channels. The chip store 7 is arranged to feed eight bit stores, two of which only, referenced 8 and 9 are shown in the drawing. One bit store is provided for each channel and is fed from the chip store 7 with chips appertaining to that channel. Thus bit store 8 for example is fed via lines 9 with chips appertaining to channel 1 and for simplicity a part only of the chip store 7 is shown schematically and accordingly it will be appreciated that three of the lines 9 only are shown connected to appropriate addresses in the chip store 7.

Bits appertaining to each channel are differently coded and in channel 1 for example the code 10100101 as shown is indicative of a '1' bit and the inverse of this binary number i.e. 01011010 is indicative of a '0' bit. Bit detectors such as bit detectors 10 and 11 are provided in each channel for the recognition of bits appertaining to the channel in which they are connected. Detected bits are fed over the data highways 12 and 13 to channel bit stores 14 and 15. The channel bit store 14 serves channel 1 and the channel bit store 15 serves channel 2. Six other channel bit stores are provided one for each channel but not shown in the drawing. The contents of the bit stores 14 and 15 are compared in comparators 16 and 17 with stored character information held in character stores 18 and 19 respectively. When correspondence obtains between the contents of the channel bit stores and a particular character an appropriate output signal is applied on the output lines 20 and 21 for channel 1 and channel 2 respectively other lines for other channels being provided although not shown.

In the present example characters are defined by eight bits and thus each character is defined by 64 chips. Since however the eight channels are transmitted in TDM mode it will be appreciated that every eigth chip received will relate to channel 1 and so therefore in order to define one character in channel 1, 512 chips must be received by the receiver 1.

Under normal operating conditions if channel 1 is regarded as the priority channel it might be used for the transmission of digitally encoded data whilst channels 2 to 8 may be used in combination, for the transmission of delta modulated or pulse code modulated speech data. The received error rate is determined by means of an error rate detector 22 responsive to operation of the comparator 16. Signals indicative of the received error rate are transmitted by the transmitter 3 to be received at the remotely located transceiver (not shown) when the error rate detected by the error rate detector 22 rises above a predetermined limit. This will be sensed at the remotely located transceiver and additional channels will be devoted to the transmission of priority data. If channel 2 for example is arranged to carry the same data as channel 1 then it will be apparent that the bit store 8 will be receiving the appropriate bit code for twice the normal time. In the limit, all eight channels are devoted to the transmission of priority data and it will be apparent that the bit store 8 will be filled for the whole of the transmission period the appropriate channel 1 bit code.
Thus it will be appreciated by those skilled in the art that
the immunity to noise of the priority channel, (in this case
channel 1) will be improved and it will also be apparent that
the system is automatically adaptive, whereby adaptation of
the number of channels devoted to priority data is effected
automatically in accordance with error rate detection.

If at the remotely located transceiver the error rate
detected increases beyond the predetermined threshold then an
appropriate signal will be fed to the receiver 1 of the local
transceiver which will be detected by the data encoder and
priority channel controller 5 and appropriate assignation of
data to more than one channel for priority purposes will be
effected.

It will be apparent that under normal signal conditions
the eight channels may be operated independently and under
conditions of noise or interference they will be dropped out
in order of least significance.

The manner of operation of the chip store, the bit store,
the channel store and the character store are not described
herein in detail because it will be appreciated by those
skilled in the art that the invention consists principally in
the system of operation.  Precise operation of the data
decoder and priority channel controller will also not be
considered herein in detail.  Any suitable technique for data
decoding and data routing may be utilised under control of the
received error rate detection signal and the precise manner in which this operation is effected is not central to the present invention.

It will also be appreciated that any form of error rate detection may be used in accordance with the code employed.

The receiver 1 and the transmitter 3 may take any conventional form including base band amplification or intermediate frequency amplification stages and demodulators and modulators in accordance with the mode of modulation chosen.

The present invention has the important advantage that maximum use is made of the available effective transmission band width whereby a highly noise immune channel, occupying in effect a wide band width, is not used unless required.

It will be appreciated that the effective band width available is normally used for the transmission of a plurality of channels and that only under conditions of high noise and interference will the full available effective band width be devoted to a priority channel.

Note that the transmitted data bits may be generated using standard line or radio modems e.g. multi-tone FSK, PSK, ASK, etc.

0112666

CLAIMS

1.   A communication system comprising a local transceiver for the transmission to and reception from a similar remotely located transceiver of data over N-channels each arranged to carry digital data at, or with reference to a common channel centre frequency, wherein data chips apertaining to each channel are transmitted sequentially in TDM (time division multiplex) mode; wherein at least one of the N-channels is used for the transmission of priority data bits each defined by M chips so that one priority data bit is transmitted each NM data chips and wherein P data bits define each data character so that one priority data character is transmitted each NMP data chips, the local transceiver including means for adapting the number of channels assigned to carry priority data characters in dependence upon a received error rate signal transmitted from the remotely located transceiver indicative of the error rate detected in signals received from the local transceiver, whereby an increase in the detected error rate can be compensated for by a corresponding increase in the channels assigned, and means for transmitting to the remotely located  transceiver a transmitted error rate signal indicative of the error rate in data signals received therefrom, whereby at the remotely located transceiver the number of transmitted channels assigned to priority data can be increased to compensate for increases in detected error rate at the local transceiver.

2.   A communication system as claimed in claim 1 wherein the local transceiver includes indicator means arranged to be responsive to the received error rate signal transmitted from the remotely located transceiver, for indicating the error rate detected at the remotely located transceiver in data signals received from the local transceiver and switch means operable to change the channels assigned, in accordance with the indication provided by the indicator means.

3.   A communication system as claimed in claim 1 wherein the local transmitter includes control means responsive to the received error rate signal transmitted from the remotely located transceiver for changing in the local transceiver the channels assigned to priority data, in accordance with error rate which obtains at the remote transceiver.

4.   A communication system as claimed in any preceding claim wherein each transceiver includes a data encoder which includes the control means and which is arranged to feed data defining the N channels to chip store means having a capacity for at least NM data chips, bit store means responsive contemporaneously to M chips in the chip store means, the M chips being spaced one from the other by (N-1) chips, bit detector means responsive to the contents of the bit store means for loading data appertaining to bits into channel store means at addresses determined in accordance with the digital code (0 or 1), of the chips in the bit store means, comparator means responsive to the channel store means and to a character store for providing output data appertaining to a character when correspondence obtains between data bits in the channel store means and data in the character store and an error rate detector responsive to the comparator means for producing the transmitted error rate signal, the control means of the data encoder being responsive to the received error rate signal for adapting the number of channels assigned to carry priority data by assigning data chips corresponding to priority channel chips to a number of other channels.

5. A communication system as claimed in any preceding claim wherein data for all channels is carried in the form of phase or frequency modulation referred to a common channel centre frequency or by a combination of AM and FM.

6. A communication system as claimed in any preceding claim wherein one of the N channels is assigned for priority data and the remaining N-1 channels are used individually for separate discrete channel transmissions or in a group or groups for the transmission of pulse coded or delta modulated speech data.

7. A communication system as claimed in any of claims 1 to 6, comprising automatic adaptive compensation for priority data transmissions comprising assigning other additional channels for the transmission of priority data until the detected error rate is reduced whereby in the limit all channels are assigned to priority data.

0112666

1/1